# EUROPÄISCHE PATENTSCHRIFT

(11) **EP 0 943 059 B1**
(45) Veröffentlichungstag und Bekanntmachung des Hinweises auf die Patenterteilung: **11.06.2003**
(21) Anmeldenummer: 97951978.2
(22) Anmeldetag: 26.11.1997
(51) Int. Cl.: F16D 55/226

(54) **BREMSSATTEL, INSBESONDERE FÜR KRAFTFAHRZEUGE**
BRAKE CALLIPER, IN PARTICULAR FOR MOTOR VEHICLES
ETRIER DE FREIN, NOTAMMENT POUR AUTOMOBILES

(30) Priorität: 14.12.1996 DE 1965212
(43) Veröffentlichungstag der Anmeldung: 22.09.1999
(73) Patentinhaber: Continental Teves AG & Co. oHG, 60488 Frankfurt am Main (DE)
(72) Erfinder: WEILER, Rolf, D-65817 Eppstein (DE); DÖLL, Andreas, D-60439 Frankfurt (DE)
(74) Vertreter: Portwich, Peter
(86) Internationale Anmeldenummer: EP9706588
(87) Internationale Veröffentlichungsnummer: WO98027353

(56) Entgegenhaltungen:
- DE-A- 4 420 652
- US-A- 3 556 265
- US-A- 3 626 580
- US-A- 4 318 460
- US-A- 4 345 675

## Beschreibung

Die Erfindung betrifft einen Bremssattel, insbesondere für Kraftfahrzeuge, mit einer Sattelbrücke und mit zwei rechtwinklig dazu angeordneten Schenkeln, wobei an einem Schenkel ein Gehäuse mit einer Bohrung für einen Betätigungszylinder angeordnet ist.

Derartige Bremssättel sind grundsätzlich bekannt und verfügen über ein vergleichsweise hohes Gewicht. Dies wird ganz grundsätzlich als nachteilig angesehen, weil das Gewicht des Bremssattels unmittelbar in das Fahrzeuggesamtgewicht eingeht und andererseits als zusätzliche Masse nachteilig auf das Betriebs- und Federungsverhalten des Fahrwerks wirkt. Folglich wurden bereits vielfach Anstrengungen unternommen, um das Gewicht des Bremssattels zu reduzieren. Beispielsweise wird auf Aluminiumwerkstoffe zurückgegriffen, welches ein geringeres spezifisches Gewicht, aber auch eine geringere Tragfähigkeit und Steifigkeit gegenüber Beanspruchung aufweisen. Folglich muß das Festigkeits- und Steifigkeitsdefizit mit größeren Materialquerschnitten kompensiert werden. Insbesondere größere Querschnitte im Bereich der Sattelbrücke führen allerdings dazu, daß der mögliche Durchmesser der Bremsscheibe reduziert wird, was sich negativ auf die Bremsleistung auswirkt.

Aus der DE-A-44 20 652 ist ein Bremssattel einer Scheibenbremse bekannt, bei dem während der Gußherstellung ein zusätzliches Bauteil in den Bremssattel eingebettet wird. Ein solches Bauteil dient entweder der Erhöhung der Sattelfestigkeit oder der Bildung eines Kühlkanals durch den Bremssattel, indem ein rohförmiges Bauteil in den Bremssattel eingegossen wird. In jedem Fall erfordert die genaue Positionierung des Bauteils im Bremssattel nachteilig einen erhöhten Fertigungsaufwand bei der Gußherstellung und erhöht gegebenenfalls außerdem das Gesamtgewicht des Bremssattels.

Aufgabe der vorliegenden Erfindung ist es daher, einen biegesteifen Bremssattel bereitzustellen, welcher ein niedriges Gewicht und gleichzeitig im Bereich der Sattelbrücke geringe Materialquerschnitte aufweist, so daß ein möglichst großer wirksamer Bremsscheibendurchmesser realisiert werden kann. Eine weitere Aufgabe der Erfindung ist es, eine einfache Herstellung des Bremssattels zu ermöglichen.

Diese Aufgaben werden mit den kennzeichnenden Merkmalen des Patentanspruchs 1 dadurch gelöst, daß die Sattelbrücke im Inneren mindestens eine hohle Kammer aufweist, welche allseitig von zugeordneten Stützflächen begrenzt wird. Eine vorteilhafte Ausgestaltung der Erfindung besteht darin, daß jede Kammer mit mindestens einer Öffnung nach außen versehen ist. Die Öffnung ermöglicht in diesem Zusammenhang das Einführen und-das Entfernen eines Gußkerns zur Herstellung der Kammer. Darüber hinaus dient jede Öffnung der Entlüftung und Entwässerung bei Herstellung und Betrieb. Dabei sind jeder Kammer zwei diagonale Öffnungen zugeordnet, was eine besonders zuverlässige und rasche Entwässerung gewährleistet.

Erfindungsgemäß ist damit der Vorteil verbunden, daß der Bremssattel keinen Vollquerschnitt aufweist, sondern über ein geschlossenes Hohlprofil verfügt, welches im wesentlichen genauso biegesteif ist wie der Vollquerschnitt. Mit diesen Merkmalen ist eine wesentliche Gewichtsverringerung bei geringem Raumbedarf verbunden. Der erfindungsgemäße Bremssattel mit Hohlquerschnitt lässt sich kostengünstig mit Gießverfahren ohne spanende Bearbeitung herstellen.

Eine andere vorteilhafte Ausgestaltung der Erfindung besteht darin, daß die Sattelbrücke zwei Kammern und einen zwischen den Kammern vorgesehenen Durchbruch aufweist, in den die Öffnungen münden. Der Durchbruch dient im Rahmen der Herstellung als Lager für Kerne der einander gegenüberliegenden Kammern. Es ergibt sich dadurch auch die Möglichkeit, einen einzigen, einteiligen Kern zur Herstellung der Kammern zu verwenden.

Bei einer Weiterbildung der Erfindung ist der Durchbruch zwischen den Kammern im Bereich der Seitenwände mit Rippen versehen, welche mit der oberen Wandung und der unteren Wandung fluchten. Die Rippen verstärken die Gesamtstruktur und führen insbesondere zu einer verbesserten, biegesteifen Anbindung eines faustseitigen Schenkels zwischen den beiden Kammern.

Eine zusätzliche vorteilhafte Ausgestaltung der Erfindung sieht vor, daß jede Kammer mit Streben versehen ist, welche sich von der radial oberen Wandung zu der radial unteren Wandung erstrecken. Die Streben können durch entsprechende Kerngestaltung unmittelbar beim Gießen hergestellt werden und führen zu einem verbesserten Biegewiderstand des Bremssattels.

Bei einem Ausführungsbeispiel ist der Bremssattel zweiteilig, wobei die Teilungsebene rechtwinklig zu der gehäuseseitigen Zylinderachse vorgesehen ist. Diese Bauweise ermöglicht die Verwendung unterschiedlicher Werkstoffe für das Gehäuse und für die Faust des Bremssattels. So ist es beispielsweise möglich, die Faust aus Stahl und das Gehäuse aus Aluminium auszubilden.

Eine andere vorteilhafte Ausgestaltung der Erfindung sieht vor, daß der Bremssattel zweiteilig ist, wobei die Teilungsebene parallel zu der Zylinderachse vorgesehen ist. Die beiden Sattelhälften werden entlang der Teilungsebene mit Hilfe eines Elektronenstahls miteinander verschweißt. Der stark fokussierte Elektronenstrahl bewirkt einerseits eine zuverlässige Befestigung der beiden Hälften über ihren gesamten Querschnitt und andererseits eine äußerst geringe Wärmeeinflußzone in Randbereichen der Schweißnaht, so daß dünne Querschnitte, insbesondere im Bereich der Kammern ihre ursprünglichen, unveränderten Werkstoffkennwerte behalten.

Ein sinnvolles Verfahren zur Herstellung eines erfindungsgemäßen Bremssattels sieht vor, daß zur Bildung der Kammer ein Kern mit Hinterschneidungen und mit einem Kernlager in eine Form mit Formmitteln eingeformt wird, wobei sich das Kernlager im Bereich eines Durchbruchs der Sattelbrücke befindet, und nach dem Abgießen der Kern mit den Hinterschneidungen durch eine Öffnung der Kammer ausgetrieben wird.

Ausführungsbeispiele der Erfindung sind in der Zeichnung dargestellt und werden im folgenden näher beschrieben. Es zeigen:
- Fig. 1: teilweise geschnittene Draufsicht auf einen Bremssattel;
- Fig. 2: Schnitt entlang der Linie II-II in Fig. 1;
- Fig. 3: Schnitt entlang der Linie III-III in Fig. 1 in anderem Maßstab;
- Fig. 4: Schnitt entlang der Linie IV-IV in Fig. 1 in anderem Maßstab;
- Fig. 5: ein Ausführungsbeispiel im Schnitt wie in Fig. 3;
- Fig. 6: ein weiteres Ausführungsbeispiel schematisch sowie im Schnitt gezeichnet wie in Fig. 3.
- Fig. 7: Draufsicht auf ein Sattelunterteil in Richtung des Pfeiles A in Fig. 6.
- Fig. 8: Längsschnitt durch ein Ausführungsbeispiel mit verschraubten Sattelteilen.
- Fig. 9: Schnitt entlang der Linie IX-IX in Fig. 8.

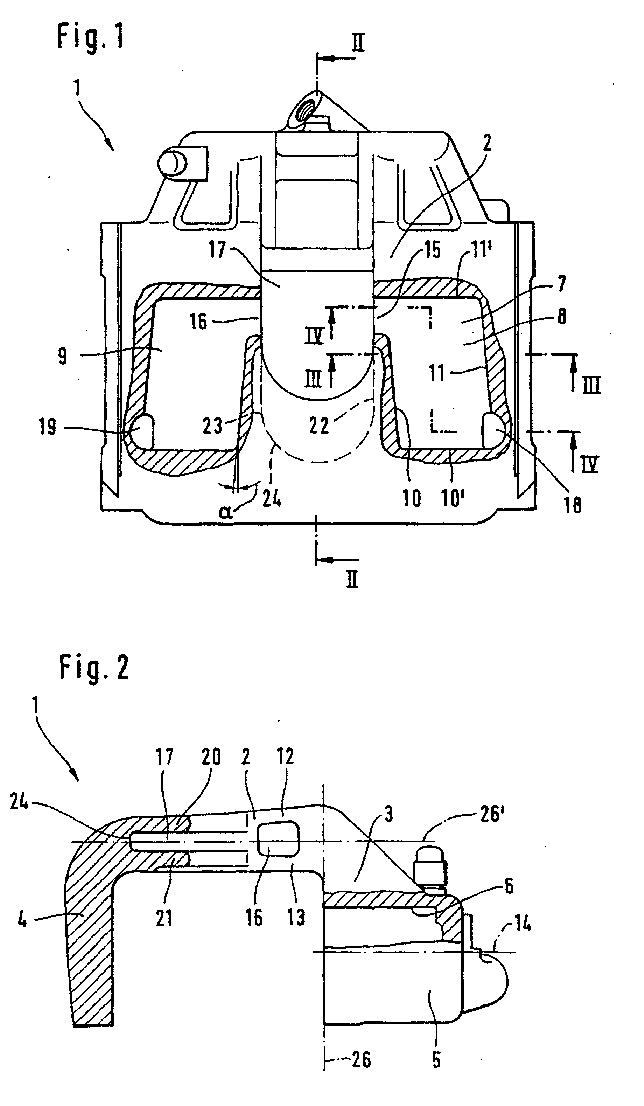

Ein Bremssattel 1 gemäß den Figuren 1 und 2 umfaßt eine Sattelbrücke 2 und zwei rechtwinklig zu der Sattelbrücke 2 angeordnete Schenkel 3,4, welche einander gegenüberliegen. An dem Schenkel 3 ist ein Gehäuse 5 mit einer Bohrung 6 für einen nicht dargestellten Betätigungszylinder angeordnet. Der faustseitige Schenkel 4 kann über mehrere, voneinander getrennte Finger verfügen. Die Sattelbrücke 2 hat in ihrem Inneren 7 zwei hohle, einander gegenüberliegende Kammern 8,9, welche allseitig von zugeordneten Stützwänden 10,10',11,11' sowie von einer radial oberen und einer radial unteren Wandung 12,13 begrenzt wird. Jede Kammer 8,9 weist eine im wesentlichen rechteckige Grundfläche auf und die Stützwände 10,11 sind in einem Winkel α zur Achse 14 der Bohrung 16 angeordnet. Also verlaufen die Stützwände 10,11 schräg.

Jede Kammer 8,9 verfügt über mindestens eine Öffnung 15,16 nach außen. Die Öffnungen 15,16 münden in einen Durchbruch 17 der Sattelbrücke 2 und liegen einander unmittelbar fluchtend gegenüber. Diagonal zu jeder Öffnung 15,16 im Bereich einer Ecke jeder Kammer 8,9 ist eine Bohrung 18,19 vorgesehen, welche nach radial innen in Richtung auf die Bremsscheibe weist. Jede Bohrung 18,19 wie auch die Öffnungen-15,16 dienen der Entlüftung und der Entwässerung der Kammern 8,9.

Zur Verstärkung der mechanischen Anbindung des faustseitigen Schenkels 4 wird der Durchbruch 17 faustseitig teilweise von Rippen 20,21 übergriffen. Jede der Rippen 20,21 erstreckt sich von Seitenwand 22 zu Seitenwand 23 und legt sich in einem Endbereich allmählich an die jeweilige Seitenwand 22,23 an. Wie die Draufsicht in Fig. 1 zeigt, weist jede Rippe im wesentlichen ein halbkreisförmiges Profil auf und der Durchbruch 17 schmiegt sich faustseitig mit einem halbkreisförmigen Ende 24 an den Schenkel 4 an. Die Gestaltung der Rippen 20,21 und des Durchbruchs 17 gewährleistet eine biegesteife Abstützung des Schenkels 4 sowie eine entsprechend biegesteife Abstützung der Sattelbrücke 2. Es bleibt darauf hinzuweisen, daß die Rippen 20,21 in einer Ebene liegen mit der oberen und der unteren Wandung 12,13 der Kammern 8,9.

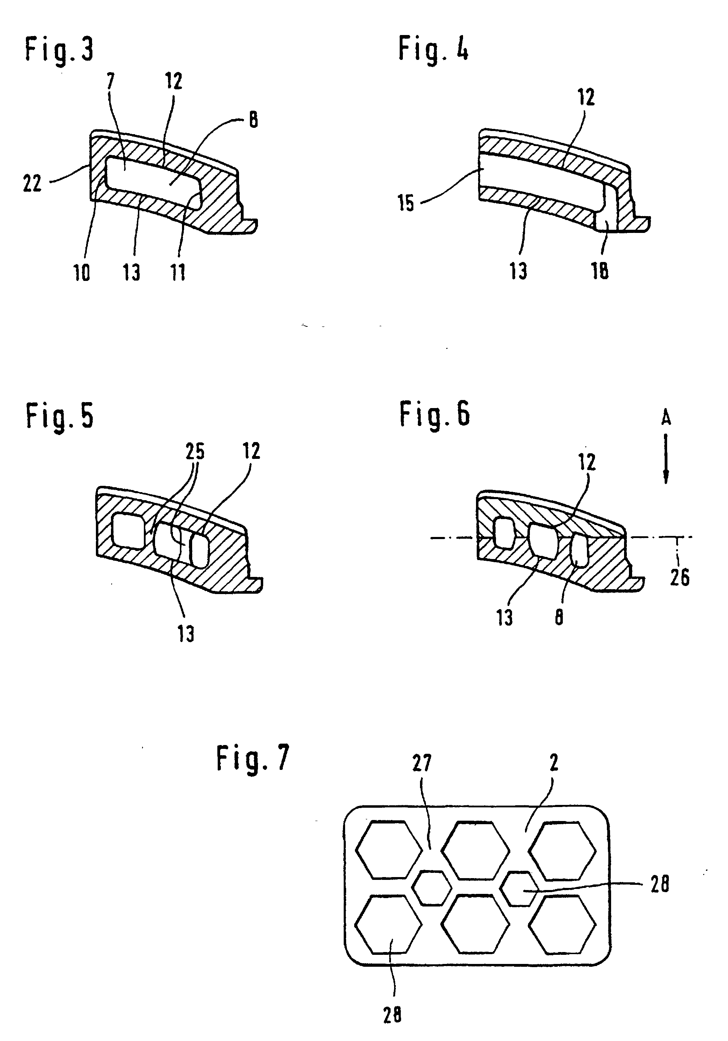

Wie Fig. 3 zeigt, weist die Sattelbrücke 2 einen geschlossenen Hohlquerschnitt auf und im Inneren 7 befindet sich die Kammer 8, welche von den Stützwänden 10 und der oberen Wandung 12 sowie der unteren Wandung 13 begrenzt wird.

Bei einer anderen Ausführungsform gemäß Fig. 5 ist jede Kammer mit rippenartigen Streben 25 versehen, welche sich von der radial oberen Wandung 12 zu der radial unteren Wandung 13 erstrecken. Die Streben 25 bestehen aus dem gleichen Material wie die Sattelbrücke 2 und stützen die Wandungen 12,13 zusätzlich ab. Zur Herstellung der Streben 25 dient der Kern für die Kammern 8,9, der in der gewünschten Art und Weise hinsichtlich Form und Querschnitt der Streben 25 mit Ausnehmungen versehen ist. Jede Ausnehmung in dem Kern führt zu einer Strebe 25 zwischen den Wandungen 12,13. Die Streben können einen beliebigen Querschnitt aufweisen und bei einem bevorzugten Ausführungsbeispiel weisen die Streben eine wabenförmige Grundfläche mit mehreren Ecken oder Elipsenform auf. Die Wandstärke zwischen den einzelnen Streben 25 kann grundsätzlich beliebig ausgebildet werden. Grundsätzlich wird eine geringe Wandstärke angestrebt, um auch das Gewicht gering zu halten. Ein Ausführungsbeispiel mit mehreckigen Zellen 28 zur Bildung von wabenförmig angeordneten Wandungen 27 zeigt die Schnittdarstellung in Fig. 7.

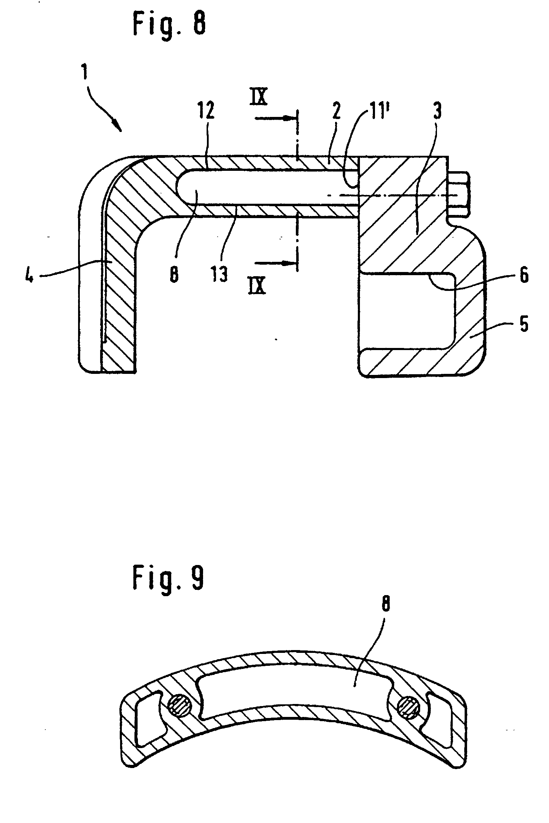

Grundsätzlich können die bisher beschriebenen Bremssättel einteilig aus einem Werkstoff hergestellt werden. Bei einer Ausführungsform der Erfindung ist der Bremssattel zweiteilig aus unterschiedlichen Werkstoffen und die Teilungsebene 26 verläuft rechtwinklig zu der Achse 14 der Bohrung 6, wie dies strichpunktiert in Fig. 2 dargestellt ist. Die Sattelbrücke 2 wird bei zweiteiligen Bremssätteln auf grundsätzlich bekannte Art und Weise an dem Gehäuse 5 befestigt, beispielsweise an dieses angeschweißt oder angeschraubt. Eine Variante eines verschraubten Sattels zeigen die Figuren 8 und 9. Hierbei bildet der Schenkel 3 mit dem Gehäuse 5 eine Stützwand der Kammer 8.

Bei einem anderen zweiteiligen Bremssattel verläuft die Teilungsebene 26' parallel zu der Achse 14 der Bohrung 6, wie dies gestrichelt in den Figuren 2 und 6 dargestellt ist. Die Teilungsebene 26' geht hierbei quer durch die Kammern 8,9, was den Vorteil hat, daß zur Herstellung der Kammern 8,9 kein Kern benötigt wird. Vielmehr weisen die beiden Sattelteile entsprechende, einander zugeordnete Ausnehmungen auf, die nach Zusammenfügen der beiden Sattelhälften miteinander die Kammern 8,9 bilden. Die Sattelhälften werden mittels Elektronenstrahlschweißen entlang der Teilungsebene aneinander befestigt, womit der Vorteil verbunden ist, daß die Wärmeeinflußzone im Werkstoff des Sattels besonders schmal ist.

Eine andere bevorzugte Ausführungsform der Erfindung ist in der Fig. 7 dargestellt und zeigt eine Draufsicht auf eine Sattelhälfte in Richtung des Pfeiles A in Fig. 6. Jede Zelle 28 ist 6-eckig und wird von den Wandungen 27 begrenzt. Die Dicke der Wandungen 27 ist grundsätzlich frei einstellbar und hängt auch davon ab, wieviele Zellen 28 vorgesehen werden. Es versteht sich, daß die Grundfläche der Zellen 28 grundsätzlich beliebig abwandelbar ist, ohne den Grundgedanken der Erfindung zu verlassen. So ist es beispielsweise möglich, die Grundfläche der Zellen 28 3-, 4-eckig oder oval zu gestalten. In Anlehnung an die runden Streben 25 ist es grundsätzlich auch möglich, jede Zelle 28 rund auszubilden. Maßgeblich ist bei dieser Bauweise allerdings, daß die Sattelteile entlang der Teilungsebene 26' über die gesamte Berührungsfläche miteinander verschweißt werden.

Zur gießtechnischen Herstellung eines Bremssattels gemäß den Fig. 1 und 2 wird ein Kern zur hohlen Herstellung der Kammern 8,9 in eine Form mit Formmitteln eingesetzt. Der Kern verfügt über Hinterschneidungen und durchgreift mindestens eine Öffnung 15,16 jeder Kammer 8,9. Ferner ist ein Kernlager im Bereich des Durchbruches 17 der Sattelbrücke 2 angeordnet, welches für eine korrekte Position des Kerns beim Gießen des Bremssattels sorgt. Nach dem Abgießen wird der Kern mit den Hinterschneidungen bzw. die Reste des Kerns durch die Öffnungen 15,16 jeder Kammer 8,9 ausgetrieben. Mit diesem Herstellungsverfahren läßt sich ein Bremssattel 1 mit hohler Sattelbrücke 2 wirtschaftlich herstellen.

## Patentansprüche

1. Bremssattel, insbesondere für Kraftfahrzeuge, mit einer Sattelbrücke (2), die im Inneren (7) mindestens eine hohle Kammer (8,9) aufweist, welche allseitig von zugeordneten Stützwänden (10,11,12,13,22,23) begrenzt wird und mit zwei rechtwinklig dazu angeordneten Schenkeln (3,4), wobei an einem Schenkel (3) ein Gehäuse (5) mit einer Bohrung (6) für einen Betätigungszylinder angeordnet ist, **dadurch gekennzeichnet, daß** jede Kammer (8,9) mit mindestens einer Öffnung (15,16) nach außen versehen ist, wobei jeder Öffnung (15,16) eine dazu diagonal gegenüberliegend angeordnete, in einer Ecke vorgesehene Bohrung (18, 19) zugeordnet ist.

2. Bremssattel nach Anspruch 1, **dadurch gekennzeichnet, daß** die Kammer (8,9) im wesentlichen eine rechteckige Grundfläche aufweist.

3. Bremssattel nach einem oder mehreren der vorhergehenden Ansprüche, **dadurch gekennzeichnet, daß** die Sattelbrücke (2) zwei Kammern (8,9) und einen zwischen den Kammern (8,9) vorgesehenen Durchbruch (17) aufweist, in den die Öffnungen (15,16) münden.

4. Bremssattel nach Anspruch 3, **dadurch gekennzeichnet, daß** der Durchbruch (17) zwischen den Kammern (8,9) im Bereich der Seitenwände (22,23) sowie im Bereich von Faustfingern mit Rippen (20,21) versehen ist, welche mit der oberen Wandung (12) und der unteren Wandung (13) fluchten.

5. Bremssattel nach Anspruch 4, **dadurch gekennzeichnet, daß** jede Rippe (20,21) allmählich an die Seitenwand (22,23) angeformt ist.

6. Bremssattel nach einem oder mehreren der vorhergehenden Ansprüche, **dadurch gekennzeichnet, daß** die Seitenwände (10,11) der Kammern (8,9) in einem Winkel a zur Achse 14 der Bohrung (6) angeordnet sind.

7. Bremssattel, insbesondere für Kraftfahrzeuge, mit einer Sattelbrücke (2), die im Inneren (7) mindestens eine hohle Kammer (8,9) aufweist, welche allseitig von zugeordneten Stützwänden (10,11,12,13,22,23) begrenzt wird und mit zwei rechtwinklig dazu angeordneten Schenkeln (3,4), wobei an einem Schenkel (3) ein Gehäuse (5) mit einer Bohrung (6) für einen Betätigungszylinder angeordnet ist, **dadurch gekennzeichnet, daß** die Sattelbrücke (2) einen geschlossenen Hohlquerschnitt aufweist.

8. Bremssattel nach einem oder mehreren der vorhergehenden Ansprüche, **dadurch gekennzeichnet, daß** jede Kammer (8,9) mit Streben (25) versehen ist, welche sich von der radial oberen Wandung (12) zu der radial unteren Wandung (13) erstrecken.

9. Bremssattel nach einem oder mehreren der vorhergehenden Ansprüche, **dadurch gekennzeichnet, daß** der Bremssattel zweiteilig ist, wobei die Teilungsebene (26) rechtwinklig zu der Achse 14 der Bohrung (6) vorgesehen ist.

10. Bremssattel nach einem oder mehreren der vorhergehenden Ansprüche, **dadurch gekennzeichnet, daß** der Bremssattel zweiteilig ist, wobei die Teilungsebene (26') parallel zu der Achse (14) der Bohrung (6) vorgesehen ist

## Claims

1. A brake caliper, in particular for motor vehicles, with a caliper bridge (2) including in its interior (7) at least one hollow chamber (8,9) which is bounded on all sides by associated supporting walls (10,11,12,13,22,23) and with two legs (3,4) arranged at right angles thereto, wherein a housing (5) with a bore (6) for an actuating cylinder is mounted on one leg (3), **characterized in that** each chamber (8,9) has at least one outlet (15,16) leading outside, with each outlet (15,16) having a bore (18,19) arranged in a corner diagonally opposite to the respective outlet.

2. A brake caliper according to claim 1, **characterized in that** the chamber (8,9) exhibits an essentially rectangular area.

3. A brake caliper according to one or several of the preceding claims, **characterized in that** the caliper bridge (2) exhibits two chambers (8,9) and an opening (17) arranged between the chambers (8,9), and that the outlets (15,16) run into this opening (17).

4. A brake caliper according to claim 3, **characterized in that** the opening (17) between the chambers (8,9) has ribs (20, 21) in the area of the side walls (22,23) and in the area of fist fingers, and that these ribs are in alignment with the upper wall (12) and the lower wall (13).

5. A brake caliper according to claim 4, **characterized in that** each rib (20,21) gradually becomes integral with the side wall (22,23).

6. A brake caliper according to one or several of the preceding claims, **characterized in that** the side walls (10,11) of the chambers (8,9) are arranged at an angle α to the axis (14) of the bore (6).

7. A brake caliper, in particular for motor vehicles, with a caliper bridge (2) including in its interior (7) at least one hollow chamber (8,9) which is bounded on all sides by associated supporting walls (10,11,12,13,22,23) and with two legs (3,4) arranged at right angles thereto, wherein a housing (5) with a bore (6) for an actuating cylinder is mounted on one leg (3),
**characterized in that** the caliper bridge (2) has a closed hollow cross-section.

8. A brake caliper according to one or several of the preceding claims, **characterized in that** each chamber (8,9) has struts (25) that extend from the radial upper wall (12) to the radial lower wall (13).

9. A brake caliper according to one or several of the preceding claims, **characterized in that** the brake caliper is designed in two pieces, with the mould joint (26) running at a right angle to the axis (14) of the bore (6).

10. A brake caliper according to one or several of the preceding claims, **characterized in that** the brake caliper is designed in two pieces, with the mould joint (26') running parallel to the axis (14) of the bore (6).

## Revendications

1. Étrier de frein, notamment pour des automobiles, comportant un pont d'étrier (2) ayant à l'intérieur (7) duquel au moins une chambre creuse (8, 9) bordée de tous côtés par des parois-supports (10, 11, 12, 13, 22, 23) associées, et comportant deux branches (3, 4) disposées à angles droits, un boîtier (5) prévu d'un alésage (6) pour un cylindre d'opération étant disposé à l'une des branches (3),
**caractérisé en ce que** chaque chambre (8, 9) extérieurement est prévue au moins d'une ouverture (15, 16), un alésage (18, 19) disposé en diagonale et en face de l'ouverture et prévu au coin étant associé à chaque ouverture (15, 16).

2. Étrier de frein selon la revendication 1, **caractérisé en ce que** la chambre (8, 9) comporte une surface de base essentiellement sous forme rectangulaire.

3. Étrier de frein selon l'une ou plusieurs de revendications précédentes, **caractérisé en ce que** le pont d'étrier (2) comporte deux chambres (8, 9) et un passage (17) prévu entre les chambres (8, 9) dans lequel débouchent les ouvertures (15, 16).

4. Étrier de frein selon la revendication 3, **caractérisé en ce que** le passage (17) entre les chambres (8, 9) dans la région des parois latérales (22, 23) et dans la région de doigt-poing est prévu des ailettes (20, 21) s'alignant avec la paroi (12) supérieure et la paroi (13) inférieure.

5. Étrier de frein selon la revendication 4, **caractérisé en ce que** chaque ailette (20, 21) progressivement se forme à la paroi latérale (22, 23).

6. Étrier de frein selon l'une ou plusieurs de revendications précédentes, **caractérisé en ce que** les parois latérales (10, 11) des chambres (8, 9) sont disposées à l'angle α à l'axe 14 de l'alésage (6).

7. Étrier de frein, notamment pour des automobiles, comportant un pont d'étrier (2) ayant à l'intérieur (7) duquel au moins une chambre creuse (8, 9) bordée de tous côtés par des parois-supports (10, 11, 12, 13, 22, 23) associées, et comportant deux branches (3, 4) disposées aux angles droits, un boîtier (5) prévu d'un alésage (6) pour un cylindre d'opération étant disposé à l'une des branches (3), **caractérisé en ce que** le pont d'étrier (2) comporte une section creuse.

8. Étrier de frein selon l'une ou plusieurs de revendications précédentes, **caractérisé en ce que** chaque chambre (8,9) est prévue des appuis (25) s'étendant de la paroi (12) radialement supérieure à la paroi (13) radialement inférieure.

9. Étrier de frein selon l'une ou plusieurs de revendications précédentes, **caractérisé en ce que** l'étrier de frein est formé en deux parties, le plan de division (26) étant prévu à angles droits à l'axe (14) de l'alésage (6).

10. Étrier selon l'une ou plusieurs de revendications précédentes, **caractérisé en ce que** l'étrier de frein est formé en deux parties, le plan de division (26') étant prévu en parallèle à l'axe (14) de l'alésage (6).
